# EUROPEAN PATENT SPECIFICATION

(11) **EP 0 180 445 B1**
(45) Date of publication and mention of the grant of the patent: **22.12.1993**
(21) Application number: 85307787.3
(22) Date of filing: 28.10.1985
(51) Int. Cl.: H04N 5/782

(54) **Video signal reproducing apparatus**
Videosignalwiedergabegerät
Appareil de reproduction de signaux vidéo

(30) Priority: 26.10.1984 JP 226274/84
(43) Date of publication of application: 07.05.1986
(73) Proprietor: SONY CORPORATION, Tokyo 141 (JP)
(72) Inventor: Kani, Tetsuo c/o Sony Corporation, Shinagawa-ku Tokyo 141 (JP)
(74) Representative: Cotter, Ivan John

(56) References cited:
- EP-A- 0 043 739
- EP-A- 0 045 667

## Description

This invention relates to video signal reproducing apparatus for reproducing a video signal from a plurality of tracks of a record medium.

It is known to use a video tape recorder (VTR) of the helical scan type as a slow motion video signal reproducing apparatus of the above kind.

European Patent application EP-A-0 045 667 discloses a VTR of the type in which the video signal is recorded and played back through a single channel with successive portions of the video signal being recorded on adjacent slanted tracks. This single channel VTR has a dynamic tracking head to enable non-standard speed replay.

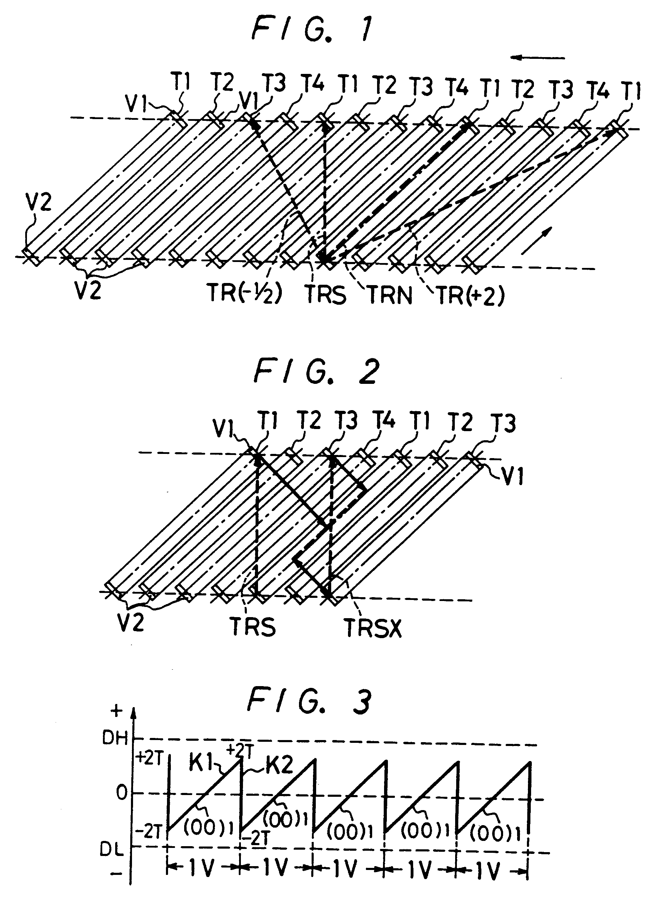

In a proposed VTR for recording and/or reproducing a high definition television signal, the television video signal is separated into four component signals, namely a first green signal (G1), a second green signal (G2), a blue signal (B) and a red signal (R), and these four video signals are recorded sequentially on tracks formed obliquely on a record medium in the form of a magnetic tape so as to be arranged sequentially in the longitudinal direction of the tape. Specifically, as shown in Figure 1 of the accompanying drawings, the four component signals are recorded simultaneously on sets of four adjacent tracks T1 to T4.

In order to reproduce the respective component signals from the recording tracks, four playback heads assigned or dedicated to the respective tracks T1 to T4 are tracked to scan or trace the corresponding tracks simultaneously so that a composite video signal can be reproduced by combining the reproduced video signals derived from the respective playback heads as required. To this end, the VTR is so formed that, while the tape is transported at, for example, normal speed, the tape is reproduced in accordance with a normal (playback) mode in which, after each playback head has scanned or traced the corresponding track once from its lower end (scanning or tracing start end) to its upper end (scanning or tracing stop end) in the head scanning or tracing direction, it is tracked to scan the lower end edge of a succeeding track formed at a position spaced by 4 tracks from the previously traced track.

Some VTRs for reproducing information recorded on a magnetic tape by means of a plurality of heads can operate in accordance with a socalled shuttle mode in which, while the tape running direction and the tape running speed both can be varied, a picture is reproduced. In this case, if the tape is transported at a speed that differs from the normal speed, the normal speed being the tape speed in the recording mode, the scanning or tracing locus on the magnetic tape of the position of the playback head, which is attached to a magnetic drum, does not coincide with the angle of each track in its longitudinal direction, but crosses each track.

More particularly, in the shuttle mode, in the event of selection of what is effectively a normal playback mode in which the tape is transported at the normal tape speed, each head scans the track assigned or dedicated to the head (this is called a corresponding track) as shown by a reference TRN in Figure 1. However, in the event of selection of a playback mode with variable tape speeds in which the tape is transported at a tape speed of, for example, twice the normal speed in the forward direction, the head follows a scanning or tracing locus TR(+2) which crosses four tracks in the direction opposite to the tape transport direction; in the event of selection of a still mode in which the tape stops running, the head follows a scanning locus TRS which crosses four tracks in the direction of the width of the tape; and in the event of selection of a reverse mode in which the tape is transported in the reverse direction at, for example, a tape speed equal to half the normal tape speed, the head follows a scanning locus TR(-1/2) that crosses six tracks in the direction opposite to that of the normal playback mode.

In practice, in the shuttle mode, the tape running speed can be varied continuously so that it is necessary that, when any scanning or tracing locus is selected over a range from the scanning locus TR(-1/2) of the reverse mode with a tape speed equal to half of the normal tape speed to the scanning locus TR(+2) of the playback mode with a tape speed equal to twice the normal tape speed, each head be caused to scan the corresponding track correctly so as to reproduced the component video signal without any dropout.

In practice, each component video signal thus reproduced is stored once in a field memory provided in a reproduced video signal processing apparatus (for example a time base corrector), then read out at a predetermined timing and then used to make up the composite video signal.

A dynamic tracking head (hereinafter "DT head") is used to enable each reproducing head to be tracked to follow the corresponding track in that the head is displaced in a direction perpendicular to the scanning or tracing direction by the amount of displacement of the scanning locus of the position of attachment of the head from the corresponding track.

When a plurality of playback heads, for example the four playback heads as described with reference to Figure 1, are to be tracked by using DT heads to scan the corresponding tracks in the shuttle mode, the amount of displacement of the DT heads becomes extremely large. However, it is in practice possible only to manufacture DT heads which can be displaced by a relatively small amount. As a result, it is very difficult for the plurality of heads to carry out a dynamic tracking operation simultaneously if use is made of such DT heads having a dynamic tracking function which is limited.

For instance, the track width of the corresponding track of each playback head is about 60 microns and the track pitch is around 357 microns. In order to carry out dynamic tracking playback over the range from the still mode to the variable speed playback mode with a tape speed equal to twice the normal tape speed, it becomes necessary to provide a DT head whose displacement range covers more than 714 microns as a peak-to-peak value. However, the range over which the displacement amount (the stroke of the peak-to-peak value) of DT heads available in practice is linear is around 700 microns. If the displacement amount exceeds this range, the stability of the dynamic tracking operation is lost. Accordingly, it is not considered practical to make the DT head carry out a dynamic tracking operation in one scan or tracing over a full range from the still mode to the variable speed playback mode with a tape speed equal to twice the normal tape speed.

In addition, it is necessary that the drive mechanism (generally a bimorph leaf) for the plurality of (four) heads for carrying out the dynamic tracking operation be in the form of a bimorph leaf which has a strength corresponding to the weight of the head, the resonance frequency and the flyback time in a jump mode. It is, however, difficult in practice to realise such an ideal bimorph leaf.

According to the invention there is provided a video signal reproducing apparatus for reproducing a video signal from a plurality of tracks of a record medium, the apparatus comprising:
a plurality of dynamic tracking heads, each arranged for scanning a corresponding track of the plurality of tracks simultaneously with the other heads;
head deflecting means for deflecting the dynamic tracking heads simultaneously in a direction transverse to the direction of the tracks;
and a video signal memory; characterised by address generating means for generating a write address signal indicative of the start address of each horizontal scanning line,
the video signal memory storing a field of the video signal reproduced by the plurality of heads at an address designated by the address generating means;
means for providing a head position information signal representing a mechanical position of a head and tracking track information representing a difference between a track currently being scanned and the corresponding track which the head should follow; and
a control circuit connected to receive the head position information signal and the tracking track information and operative to generate a drive signal for the head deflecting means and a control signal, indicative of head deflection direction and head deflection amount, for the address generating means, the address generating means being arranged to be controlled by the tracking track information to inhibit storage in the video signal memory of any video signal reproduced by a head from a track not being the corresponding track which that head should follow.

A preferred embodiment of this invention described in detail below can reproduce a video signal satisfactorily even when the speed of the record medium, which is preferably a tape, is changed over a wide range, such as in a shuttle mode. In the preferred apparatus, even when the dynamic tracking function of a dynamic tracking (DT) head has a range of movement which cannot satisfy the above-mentioned conditions, the DT head can operate sufficiently in accordance with each tape running condition in a shuttle mode so that a reproduced video signal can be reproduced positively without each head losing the recording information of a corresponding track. To this end, the DT head dynamically scans or traces oblique recording tracks formed sequentially on the tape in its longitudinal direction while the tape is transported at variable tape speed, so as thereby to reproduce a video signal from the recording track, and the apparatus includes a head displacement amount specifying means or control circuit for specifying a displacement amount which will make the DT head scan a specified track on the basis of tracking track information (TTI) for specifying a track to be scanned by the DT head and a head position information signal PSI indicative of the position of the DT head. The preferred apparatus further includes address control means for storing in a video signal memory, at a memory area thereof corresponding to a range of a reproduced video signal, a video signal recorded on a track tracked by the DT head on the basis of the displacement amount specified by the displacement amount specifying means or control circuit and the tracking track information (TTI). According to the preferred apparatus as described in outline above, when the tape running speed is varied over a wide range, the displacement amount of the DT head can be determined so as to become suitable for the above displacement amount so that video signal data recorded on the corresponding track that should be reproduced can be reproduced positively. Consequently, since the memory area in which the reproduced video signal data is stored can be specified in response to the range that can be reproduced by the dynamic tracking head, it becomes possible to reproduce the video signal from the memory correctly.

The invention will now be further described, by way of illustrative and non-limiting example, with reference to the accompanying drawings, in which like references designate like elements and parts throughout, and in which:-
Figure 1 is a diagram showing a scanning or tracing locus formed with respect to recording tracks on a magnetic tape by a playback head during operation of a video signal reproducing apparatus in a shuttle mode;
Figure 2 is a diagram for explaining the dynamic tracking operation of a dynamic tracking (DT) head;
Figure 3 is a diagram showing the format of a jump movement of the DT head;
Figure 4 is a block diagram of a video signal reproducing apparatus embodying this invention; and
Figures 5A, 5B to Figures 18A, 18B are respective diagrams showing operational modes of a DT head of the apparatus of Figure 4 in various modes.

An embodiment of the present invention will now be described in detail with reference to the accompanying drawings.

Figures 2 and 3 are respective diagrams showing a state in which the playback head corresponding to the first track T1 carries out the dynamic tracking operation in the still mode. As shown in Figures 2 and 3, the position of attachment of the playback head to the drum, or the position (hereinafter "zero displacement position") of the playback head when the DT head is not displaced, may be considered sequentially to cross the adjacent three tracks T4, T3, and T2 thereby to follow or "draw" a scanning or tracing locus TRS over the range of the four tracks. This scanning or tracing locus is referred to hereinafter as "the zero displacement scanning or tracing locus". In order that the DT head can be tracked dynamically on the corresponding track T1, the tracking head must be displaced so as to cross the four tracks as shown by a solid line arrow in Figure 2. If the scanning locus TRS is displaced to a position intersecting the central portion of the corresponding track T1, as shown by a scanning locus TRSX in Figure 2, and the dynamic tracking operation then is carried out, a change of the amount of displacement of the DT head can be obtained, as shown in Figure 3, in that the peak-to-peak displacement amount (namely the displacement in a range from an upper displacement limit DH to a lower displacement limit DL) comprises displacement in a positive direction (the direction towards the upper displacement limit DH) and displacement in a negative direction (the direction towards the lower displacement limit DL) with respect to a central reference position corresponding to zero displacement.

Thus, the tolerance or tolerable displacement range of the dynamic tracking head can be utilised effectively.

If the zero displacement scanning locus is formed at the position at which the scanning locus TRSX crosses the corresponding track T1 when the DT head has a zero displacement amount, the displacement amounts of the DT head in the positive and negative directions can be expressed in units of track intervals between the adjacent tracks.

To be more specific, if the DT head scans the corresponding track T1 shown in Figure 2 in a dynamic tracking mode at, for example, a timing corresponding to one vertical synchronising signal interval or period 1V of the video signal, the displacement amount of the DT head can be expressed by a straight line K1 in Figure 3, in which the DT head is displaced by two track amounts in the negative direction at the scanning start end of the corresponding track T1. This displacement is represented as 2T. This displacement amount decreases rectilinearly as the DT head moves towards the centre of the corresponding track T1 and becomes zero when the DT head arrives at the centre of the track T1. Then, from this state, the DT head scans in the direction towards the scanning stop end of the track T1, the displacement amount of the DT head being increased rectilinearly in the positive direction from the state of zero displacement.

That is, the DT head is displaced from the position displaced by two tracks in the negative direction (the displacement amount -2T corresponding to the distance between the tracks T1 and T3), with the corresponding track T1 acting as a reference, to the position of zero displacement, where the DT head is tracked on the corresponding track T1. The DT head then is further displaced by an amount equal to two tracks (the displacement amount +2T corresponding to the distance from the tracks T1 to T3) in the positive direction.

However, since the tape is stopped, that is it is not running, after the reproducing head has passed the scanning stop end of the corresponding track T1 the DT head has to be tracked once again from the scanning start end of the same corresponding track T1. To this end, the displacement of the DT head is changed from the displacement amount (+2T) at the scanning stop end to the displacement amount (-2T) at the scanning start end in a short time of period. In other words, when the scanning of one vertical synchronising signal interval 1V has ended, the amount of displacement of the DT head is changed in one step by an amount equal to four tracks. This is called a 4-track jump.

Such an operation is repeated at every vertical synchronising signal interval 1V, whereby the DT head is tracked dynamically on the corresponding track so that a recorded video signal of an amount equal to one field is reproduced repeatedly, whereby a still picture is reproduced.

In practice, the upper displacement limit DH and the lower displacement limit DL in Figure 3 are selected to be of values lower than the upper limit and the lower limit of the allowable displacement range of the bimorph leaf by a distance (about 90 microns) of nearly one track amount so that, in the succeeding jump, the bimorph leaf is prevented from exceeding the displacement limit thereof.

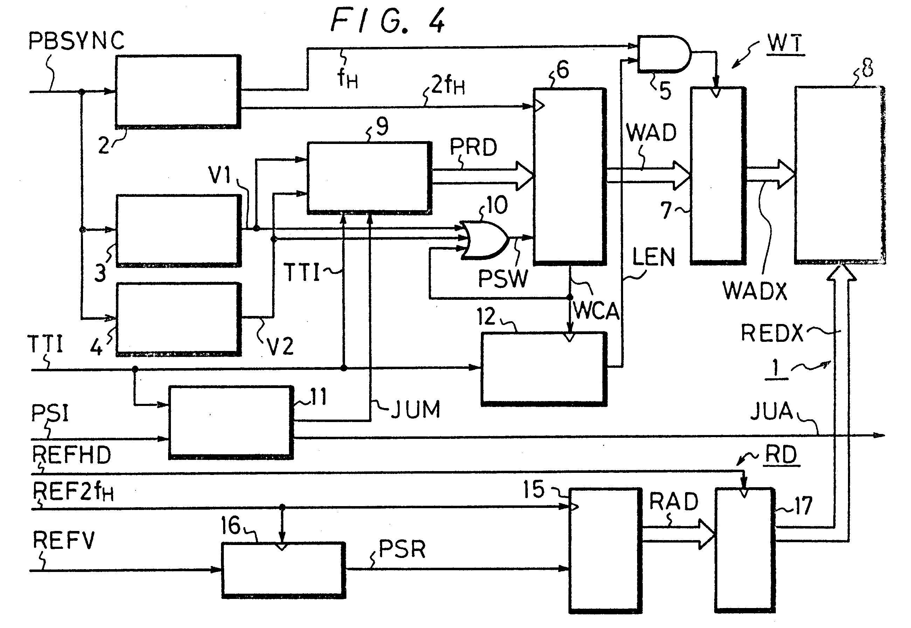

The reproduced video signal played back from the corresponding track as described above is supplied to a reproduced signal processing circuit 1 shown in Figure 4. A reproduced synchronising signal PBSYNC is extracted or separated therefrom and the signal PBSYNC is supplied to a horizontal synchronising frequency control circuit (horizontal AFC circuit) 2 and to first and second vertical synchronising separating circuits 3 and 4 in a write address signal system WT.

The horizontal synchronising frequency control circuit (horizontal AFC circuit) 2 separates the horizontal synchronising signal from the reproduced synchronising signal PBSYNC and produces a horizontal synchronising frequency output f_{H} in the form of a continuous wave which is not affected by the horizontal synchronising signal even if dropout occurs in the horizontal synchronising signal. The horizontal synchronising frequency output f_{H} is supplied to a two-input AND circuit 5. The horizontal AFC circuit 2 also produces a synchronising output 2F_{H}, having a frequency which is twice that of the horizontal synchronising frequency output F_{H}, which is supplied to a write address counter 6.

The write address counter 6 functions to latch the count content thereof into a latch circuit 7 as a write address signal WAD indicative of the start address of each horizontal scanning line. The write address of a field memory 8 is specified by a latch output WADX from the latch circuit 7. The field memory 8 is arranged sequentially to write therein the video data of one horizontal scanning line at an address thereof which increments sequentially from the above-mentioned write address.

In this embodiment of the invention, as shown in Figures 1 and 2, vertical synchronising signals V1 and V2 are recorded separately on the scanning start end portion and on the scanning stop end portion, respectively, of each of the tracks T1 to T4. The vertical synchronising signals V1 and V2 are separated by the vertical synchronising separating circuits 3 and 4, respectively, and fed to a preset value generating circuit 9. The reason why the respective vertical synchronising signals V1 and V2 are inserted into both the end portions of each track is as follows. If, when the DT head performs the dynamic tracking operation in accordance with the change of the tape running condition in the shuttle mode, the range over which the DT head can scan in practice fluctuates and one of the vertical synchronising signals cannot be reproduced, it can be interpolated by another one. The vertical synchronising signals V1 and V2 separated by the vertical synchronising separating circuits 3 and 4 are supplied through an OR circuit 10 to the write address counter 6 as a preset signal PSW, whereby preset data PRD derived from the preset value generating circuit 9 is loaded in the write address counter 6.

The preset value generating circuit 9 functions to produce the preset data PRD by which the video signal data picked up from the corresponding track by the DT head is written in a memory area corresponding to the position on the track from which the video signal data is picked up. For this reason, the preset value generating circuit 9 receives the vertical synchronising signals V1 and V2 from the vertical synchronising separating circuit 3 and 4, tracking track information TTI for specifying the track that the head currently is tracing, and a jump track information signal or control signal JUM for the DT head. All of these items of information are used as conditions for specifying the memory area, in which the video data of one field amount is to be written, suitable for the dynamic tracking operation that is being carried out at present. On the basis of these conditions, the preset value generating circuit 9 produces the preset data PRD.

The tracking track information TTI comprises 2 bits of information which indicate the displacement amount of the track that is being scanned at present relative to the corresponding track that would be reproduced in the case of the normal playback mode. When the DT head traces the corresponding track, the tracking track information TTI takes up a logic value or content "00". When, on the other hand, the track is displaced by 1, 2 and 3 track amounts in the direction opposite to the tape running direction in the normal playback mode, the tracking track information TTI takes up logic values or contents "01", "10" and "11", respectively,

The jump track information signal or control signal JUM is produced from a jump control circuit 11. The jump control circuit 11 receives a head position information signal PSI indicative of the mechanical position of the DT head when it is not displaced (that is, the zero displacement position) and the above-mentioned tracking track information TTI, and determines the direction and the amount of the jump to which the DT head is to be subjected when the succeeding vertical synchronising interval 1V arrives. Then, the jump control circuit 11 supplies data indicative of the jump direction and jump amount to the preset value generating circuit 9 as the jump track information signal or control signal JUM and supplies to a dynamic tracking control circuit (not shown) a jump drive signal JUA which is used to carry out the jump operation. The jump control circuit 11 includes judging reference data so that the DT head can trace the corresponding track once during any interval 1V without fail. Thus, it is possible to reproduce the video signal of the corresponding track without fail.

When the DT head is placed in the state in which it is able to scan or trace the corresponding track, the tracking track information TTI takes up the logic value "00" indicative of the fact that the DT head is not displaced from the corresponding track. At that time, the tracking track information TTI controls a latch control circuit 12 so as to produce a latch enable signal LEN. The latch enable signal LEN is supplied to the two-input AND circuit 5, which then supplies the horizontal synchronising frequency output f_{H} to the latch circuit 7 as a clock signal. Accordingly, the write address signal WAD from the write address counter 6 at the time when the DT head traces the corresponding track is latched in the latch circuit 7, whereby the field memory 8 starts writing the video signal data.

Thereafter, when the logic value or content of the tracking track information TTI is changed from "00", the latch control circuit 12 is controlled so as not to produce the latch enable signal LEN. Consequently, the latch circuit 7 is supplied with no horizontal synchronising frequency output F_{H} so that the latch circuit 7 does not any longer carry out the latching operation and the field memory 8 stops writing the video signal data.

In this embodiment, a carry output WCA from the write address counter 6 is fed back through the OR circuit 10 to the write address counter 6 as the preset signal PSW thereof. Thus, when the write address counter 6 finishes up a series of write address operations, it can be preset to an initial value by the preset signal PSW. Accordingly, when both the vertical synchronising signals V1 and V2 are not being produced while the tape running state is being varied, if the write address counter 6 is preset to its initial value by the carry output WCA the write address signal WAD can be produced continuously from the write address counter 6.

The video signal data written in the field memory 8 at every scanning line is read out therefrom by a read latch output REDX obtained from a read address signal system RD. The read address signal system RD includes a read address counter 15 which is supplied with a reference synchronising output REF2f_{H} as a clock signal therefor. A delay circuit 16 produces a preset signal PSR for the read address counter 15 by delaying a reference vertical synchronising signal REFV by a predetermined delay time. Then, the count content of the read address counter 15 is fed to a latch circuit 17 as a read address signal RAD.

The latch circuit 17 is supplied with a reference horizontal synchronising signal REFHD as a latch signal therefor. Accordingly, the latch circuit 17 latches the read address signal RAD at every period of the reference horizontal synchronising signal REFHD, which has a stable period, and supplies the read latch output REDX to the field memory 8 as a read address signal thereof.

As described above, in operation of the reproduced signal processing circuit 1 shown in Figure 4, the reproduced video signal data can be stored in the field memory 8 on the basis of the write address signal WAD, the timing of which fluctuates, produced in synchronism with a jitter component of the video signal produced on the basis of the reproduced synchronising signal PBSYNC, and the reproduced video signal data thus stored in the field memory 8 can be read out therefrom on the basis of the reference horizontal synchronising signal REFHD having the stable period so that the time base of the reproduced video signal can be corrected.

In consequence, when the tape running states (that is the tape transport direction and the tape speed) are changed as desired just like the shuttle mode, if the four DT heads are jump-controlled during one vertical synchronising signal period (referred to also as "the 1V period") in accordance therewith as required and the write address signal WAD for the field memory 8 is produced in synchronism therewith, the video signal data reproduced from the corresponding tracks by the respective DT heads can positively be stored in the field memory 8 at memory areas thereof corresponding to the positions on the tracks at which the items of video signal data are picked up.

An explanation will now be given of the operation of the write address signal system WT for respective different states of the shuttle mode, such as when the tape is changed from the still mode to a tape speed in the positive (forward) direction equal to twice the normal tape speed and when the tape is changed from the still mode to a tape speed in the reverse direction equal to -1/2 times the normal tape speed.

In the following case, with regard to the DT head, the peak-to-peak displacement amount between the upper displacement limit DH and the lower displacement limit DL described in connection with Figure 3 is six track amounts, the portion of the upper displacement limit relative to the displacement position with the DT head is not displaced, namely the zero displacement position, is 3.5 track amounts (represented as +3.5T), and the lower displacement limit DL relative to the zero displacement position is 2.5 track amounts (represented as -2.5T). Accordingly, when the DT head is displaced to a position beyond the upper displacement limit DH or the lower displacement limit DL with the zero displacement position as the reference, the DT head must be controlled so as to return within the tolerance range (that is, the range from the upper displacement limit DH to the lower displacement limit DL) in the next jump operation. The jump amount of the DT head is controlled by the jump control circuit 11 shown in Figure 4.

While, for the present embodiment having four DT heads, only the DT head corresponding to the first track T1 will be described below, it should be appreciated that the other three DT heads (corresponding to the other tracks T2 to T4) are operated in like manner.

### (1) Still mode

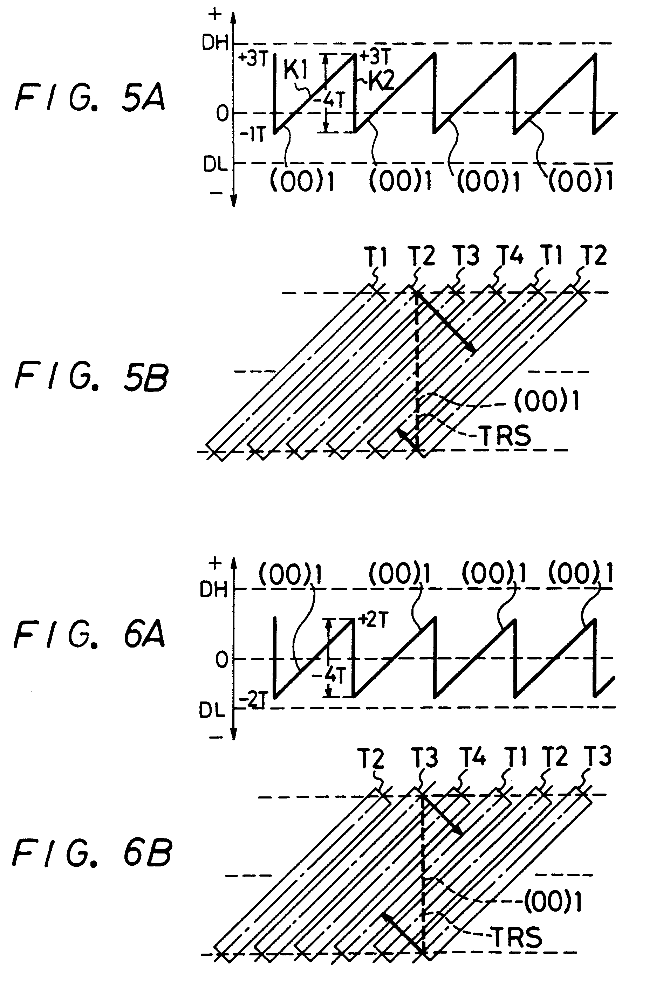

The still mode is a mode in which the tape is stopped from running and the corresponding track is scanned or traced repeatedly during the 1V period. In this case, as shown in Figures 5B and 6B, which correspond to Figure 1, since the scanning or tracing locus TRS of the zero displacement position of the DT head (which is called the zero displacement scanning locus) crosses four track amounts, the DT head carries out a dynamic tracking operation to correct the crossing operation by displacing itself by four track amounts during the 1V interval. At the same time, when the 1V interval is ended, the DT head carries out a jump operation over a displacement amount of 4 track amounts and then returns to the original position.

In order to carry out such operation within the tolerance displacement range (the range from the upper displacement limit DH to the lower displacement limit DL), the jump format of the DT head may be realised by two dynamic tracking operations, which are shown in Figures 5A and 6A (each corresponding to Figure 3).

In the case of Figure 5A, the reference position of the DT head is taken as the corresponding track T1, the DT head is displaced from -1T to +3T during the 1V interval, and, when the 1V interval is ended, the DT head is caused to jump by 4 track amounts (namely -4T) from the scanning stop displacement position +3T to the next scanning start displacement position -1T. The zero displacement scanning or tracing locus TRS thus is formed at a position to cross the corresponding tracing track T1, as shown in Figure 5B.

Accordingly, in the reproduced signal processing circuit 1 (Figure 4), the logic value or content of the tracking track information TTI indicative of the track that is currently or presently being tracked becomes "00" and the DT head position information PSI indicative of the zero displacement position of the DT head indicates the zero displacement scanning locus TRS so that the jump control circuit 11 supplies a DT head displacement drive signal JUA to the DT head drive apparatus to displace the DT head from the zero displacement position by such an amount that it travels along the straight line K1 shown in Figure 5A. Consequently, as shown by an arrow in Figure 5B, the DT head is displaced from the zero displacement scanning locus TRS to the specified track "00" (that is, T1) to scan that track so that a video signal is reproduced from the corresponding track T1.

In Figures 5A and 5B, the reference specifying the logic value or content of the tracking track information TTI is supplemented by an additional number that indicates the relevant one (that is, "(00)1") of the corresponding tracks "00". Accordingly, when the corresponding track to be tracked is changed, such track is indicated by adding the numeral "1" to "00". Other tracks will be indicated by a similar convention.

Generally, the range in which the DT head can scan or trace the track T1 is changed in accordance with the tape speed and is limited to a part of the corresponding track in the still mode as shown in Figure 5B. Therefore, in order to store the reproduced video signal in the range of the memory area corresponding to the above scanning or tracing range, the jump control circuit 11 supplies the jump track information signal or control signal JUM to the preset value generating circuit 9.

As a result, the DT head can reproduce the video signal from the corresponding track T1 corresponding to the range from the scanning start displacement position -1T to the scanning stop displacement position +3T and can store the reproduced video signal sequentially in the field memory 8 at a memory area thereof corresponding to the above scanning or tracing range. This operation is repeated at every 1V interval.

Figures 6A and 6B show the operation in a case in which the position of the zero displacement scanning or tracing locus TRS of the DT head is displaced as compared with the case of Figures 5A and 5B. In this case, except for the fact that the DT head is displaced in a range from the scanning start displacement position -2T to the scanning end displacement position +2T, the DT head is tracked dynamically on the corresponding track T1 thereby to reproduce the video signal in a similar manner to that of Figures 5A and 5B.

In this case, as will be clear from a comparison of Figure 5B with Figure 6B, the range in which the DT head can scan or trace the corresponding track T1 is displaced to a position different from that of Figure 5B. Accordingly, the jump control circuit 11 supplies a jump track information signal or control signal JUM corresponding to such change to the preset data generating circuit 9 so as thereby to change the preset data PRD so that the reproduced video data can be stored in the field memory 8 at a memory area thereof corresponding to the range in which the DT head traces the corresponding track.

### (2) Still mode to playback mode with tape speed +1/4 times the normal tape speed

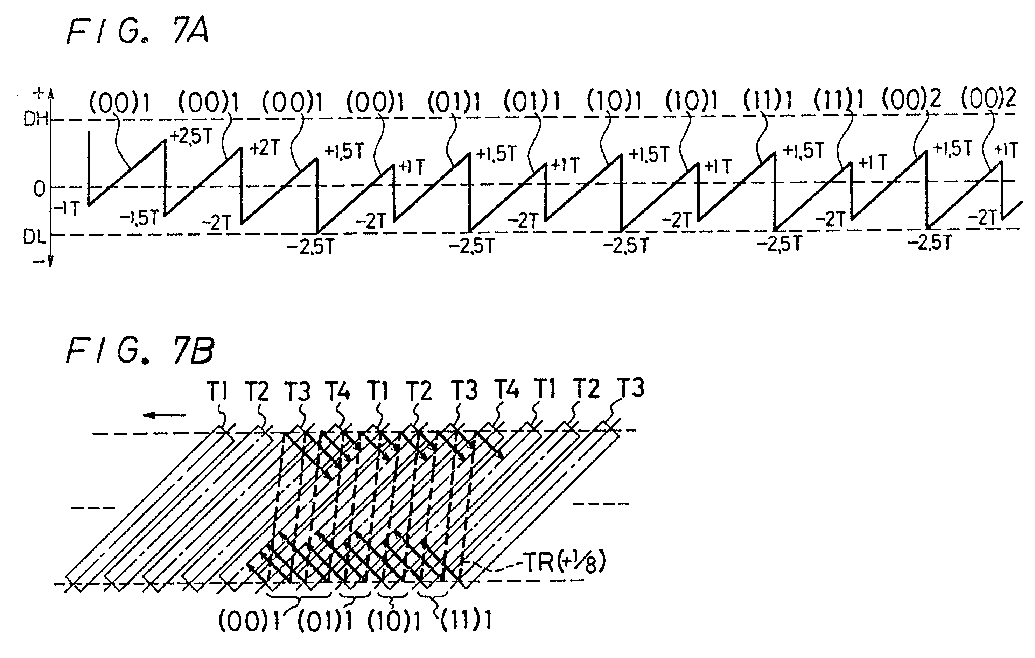

A playback mode with a tape speed equal to +1/8 times the normal tape speed will be described as representative of this mode. In this case, the tape is transported in the positive direction by 1/2 of a track amount every time the head carries out one scan or tracing. Accordingly, the zero displacement scanning locus TR(+1/8) is moved sequentially to a position corresponding to 1/2 of a track interval for every scan or tracing of the head, as shown in Figure 7B. In this state, in order to displace the DT head so as to satisfy the displacement tolerance range, the DT head is displaced with the zero displacement position as a reference by a format as shown in Figure 7A, whereby the DT head can scan the corresponding track T1 with sufficient tolerance.

In other words, the tracking track information TTI specifies the first corresponding track (00)1, and the DT head displacement drive signal JUA (which causes the DT head to jump from the displacement stop position to the displacement start position by 4 track amounts (that is, -4T)) and the jump track information signal or control signal JUM both are produced by the jump control circuit 11.

Since the tape is moved in the positive direction by 1/2 of a track amount during every one scan or tracing of the DT head, when the DT head reaches the displacement stop position and then jumps by 4 track amounts to the displacement start position the zero displacement position of the DT head at the next scan or tracing start time is displaced in the reverse direction (towards the right in Figure 7B) by 1/2 of a track amount. Thus, the displacement amount of the DT head relative to the corresponding track is displaced by -1/2T (Figure 7A).

The displacement of the displaced amount is accumulated gradually until it reaches the lower displacement limit (-2.5T). If this state were maintained thereafter, the displacement amount of the DT head would exceed the tolerance range so that the DT head could not carry out the jump operation. Therefore, the jump control circuit 11 detects when the displacement amount of the DT head reaches the lower displacement limit DL and thereupon changes the jump amount of the DT head at the next jump from 4 tracks to 3 tracks. At that time, the tracking track information TTI becomes such as to change the track to be scanned from the corresponding track T1 to the adjacent track T2, and the data is changed from the first track (00)1 to the second track (01)1. When such a state occurs the DT head is controlled dynamically to be tracked on the track T2 and to scan the track T2. However, at that time, since the reproduced video signal is being reproduced from a track that is not a track to which the DT head is assigned or dedicated, in order to prevent this reproduced video signal from being stored in the field memory 8 the latch control circuit 12 is controlled by the tracking track information TTI so as to not deliver the latch enable signal LEN.

As a result, the DT head scans the track T2 in a range from the displacement start position -2T to the displacement stop position +1.5T and the displacement level of the DT head thereby is returned in the positive direction by 0.5T.

When such scanning of the DT head is ended, the jump control circuit 11 reverts to specifying a jump amount equal to -4T. Therefore, when the next scan or tracing is started, the displacement start position of the DT head is returned again to the lower displacement limit -2.5T and the DT head scans the track 2T in a range from this position to the displacement stop position +1T. Then, the jump control circuit 11 again changes the jump amount produced when this scan or tracing is ended to -3T.

When the second track T2 is scanned or traced twice in the manner described above, the scanning locus TR(+1/8) of the zero displacement position of the DT head is moved to a position at which it cannot scan the track T2 so that the tracking track information TTI changes to "10" to specify the third track T3. Then, the jump control circuit 11 produces a DT head displacement drive signal JUA and jump track information JUM that will cause the DT head to scan the specified track (10)1 in a range from the displacement start position -2T to the displacement stop position +1.5T.

In this way, the DT head is placed in a state to be tracked dynamically on the third track T3. In this case, since the video signal reproduced at that time is not reproduced from the corresponding track, the latch control circuit 12 is controlled so as not to produce the latch enable signal LEN so that the reproduced video signal is prevented from being stored in the field memory 8.

In like manner, at every two scans or tracings, the tracking track information TTI sequentially moves the track to be scanned in the positive direction. In accordance therewith, at every one scan or tracing, the jump control circuit 11 alternately and sequentially changes the jump amount of the DT head from 3 track amounts (-3T) to 4 track amounts (-4T).

As described above, the DT head is tracked dynamically and sequentially on the tracks T1 to T4 with a jump amount within the jump tolerance range and reproduces the video signal from the respective tracks. However, of the reproduced video signals, only the video signals reproduced from the corresponding tracks are stored in the field memory 8.

### (3) Playback mode with tape speed +1/4 times the normal tape speed

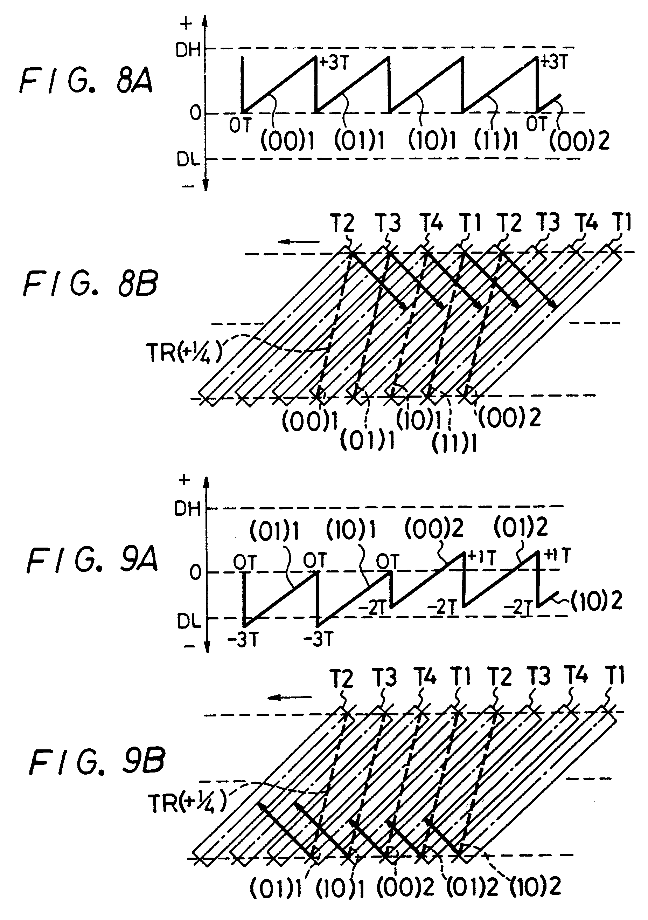

In this case, during one scan or tracing of the DT head, the tape is transported in the positive direction by one track amount so that, as shown in Figure 8B, the zero displacement scanning or tracing locus TR(+1/4) of the DT head crosses the recording tracks by 3 track amounts during one scanning or tracing period and the interval or spacing between respective zero displacement scanning loci TR(+1/4) becomes one track amount. The tracking track information TTI sequentially specifies (00)1, (01)1, (10)1, (11)1, (00)2, ... as the tracks sequentially to be scanned, as shown in Figure 8A. Thus, in order that the DT head sequentially will scan the tracks T1, T2, T3, T4, T1, ..., the jump control circuit 11 selects the jump amount of the DT head to be 3 track amounts (-3T) from the displacement end position to the next displacement start position.

Accordingly, since the DT head is displaced by 3 track amounts between the zero displacement position and the +3T position, the video signals can be reproduced in the sequential order of the tracks T1, T2, T3, T4, T1, ... . In this case, the latch control circuit 12 functions such that only when the DT head scans the corresponding track T1 is the video signal reproduced from the track stored in the field memory 8.

Figures 9A and 9B illustrate what occurs when the mode is changed to the normal mode from a transient state, for example when the playback mode is changed from the still mode to the mode with a tape speed equal to +1/4 times the normal tape speed. For example, if the displacement start position exceeds the lower displacement limit DL more than twice during the scans or tracings, the jump control circuit 11 detests this and decreases the jump amount from -3T to -2T when the tracking track information TTI changes from "10" to "11".

When the tracking track information TTI sequentially specifies the tracks to be tracked in the order (01)1, (10)1, (00)2, (01)2, (10)2, ..., as shown in Figure 9A, since the scan or tracing of the track T1 specified by the scanning locus (00)2 after the DT head has jumped two tracks skips the preceding track T4, as shown in Figure 9B, the zero displacement scanning locus TR(+1/4) of the DT head can be returned inside the tolerance range by a displacement amount displaced from the tolerance range.

Thus, the stable playback mode with a tape speed equal to +1/4 times the normal tape speed can be entered from the still mode.

### (4) Playback mode with tape speed +1/4 times the normal tape speed to playback mode with tape speed +1/2 times the normal tape speed

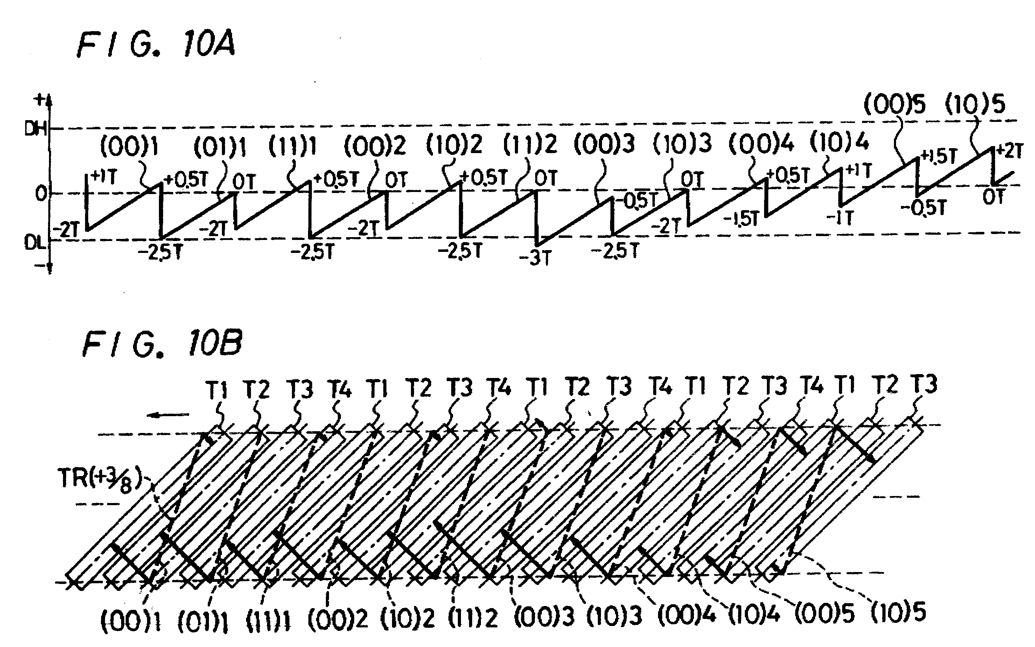

In the case where the tape runs at, for example, a tape speed equal to +3/8 times the normal tape speed, the tracking track information TTI specifies sequentially the tracks to be tracked dynamically in the order of (00)1, (01)1, (11)1, (00)2, (10)2, (11)2, (00)3, (10)3, (00)4, (10)4, (00)5, (10)5, ... as shown in Figure 10A, and the tape is transported in the positive direction by 1.5 track amounts during one scan or tracing of the DT head so that the zero displacement scanning locus TR(+3/8) of the DT head sequentially forms scanning loci which have an interval or spacing of 1.5 tracks and which cross the recording tracks by 2.5 track amounts.

In this case, the jump control circuit 11 causes the track jump amount to be 2 tracks (-2T) when the displacement of the DT head exceeds the lower displacement limit DL and then changes the jump amount to 3 tracks (-3T) when the displacement amount of the DT head thereafter exceeds the upper displacement limit DH. Thus, the displacement amount of the DT head always will lie within the range from the upper displacement limit DH to the lower displacement limit DL.

This embodiment of the invention includes a predetermined condition that, when the tracking track information TTI takes up the logic value "11" to specify the third track T3, the 2-track jump cannot be changed even if the displacement amount of the DT head exceeds the lower displacement limit DL. Accordingly, only if the displacement amount of the DT head exceeds the lower displacement limit DL more than twice can the track jump amount be changed from a 3-track jump to a 2-track jump.

In this way, as shown in Figure 10B, the jump amount of the DT head properly may be a 2-track jump or a 3-track jump and the DT head can scan all the corresponding tracks so that it is possible to reproduce the video signal from the corresponding track positively.

### (5) Playback mode with tape speed +1/2 times the normal tape speed

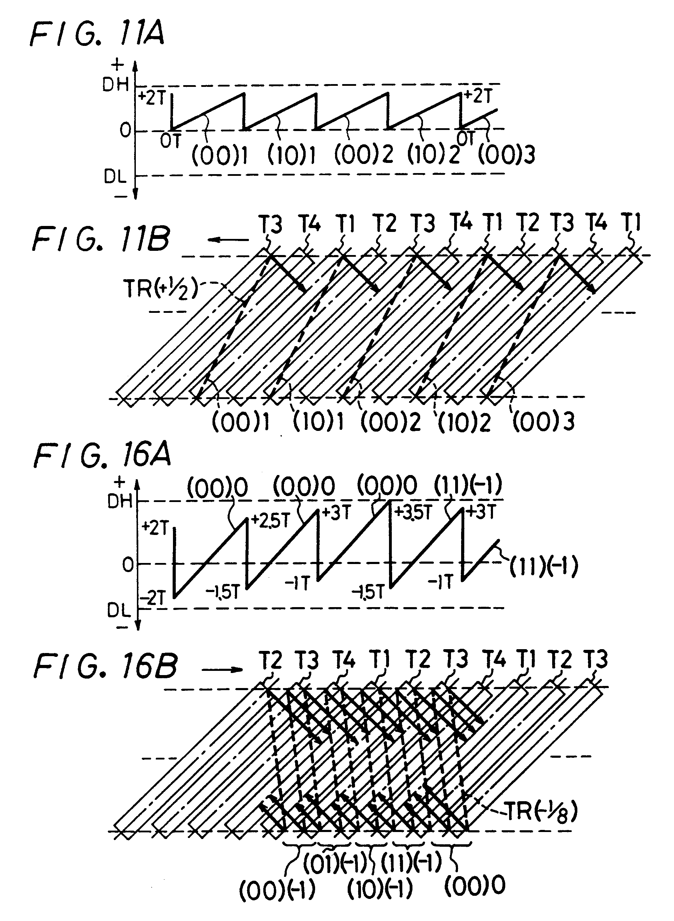

In this case, during one scan or tracing of the DT head, the tape is transported in the positive direction by 2 track amounts. Accordingly, the zero displacement scanning locus TR(+1/2) of the DT head sequentially forms scanning loci which have an interval or spacing of 2 tracks and which cross the recording tracks by 2 track amounts, as shown in Figure 11B. In order that the corresponding track "00" and the adjacent track "10" with one track therebetween can be specified alternately and sequentially, the tracking track information TTI, as shown in Figure 11A, sequentially specifies the tracks to be dynamically tracked in the sequential order (00)1, (10)1, (00)2, (10)2, (00)3, ... Then, the jump control circuit 11 specifies the 2-track jump.

Consequently, as shown in Figure 11B, the video signal can be reproduced from the corresponding track T1 at every other scan or tracing whereby, merely by displacing the DT head by a displacement amount of 2 track amounts, the video signals reproduced from all of the corresponding tracks can be stored in the field memory 8.

### (6) Playback mode with tape speed +1/2 to +3/4 times the normal tape speed

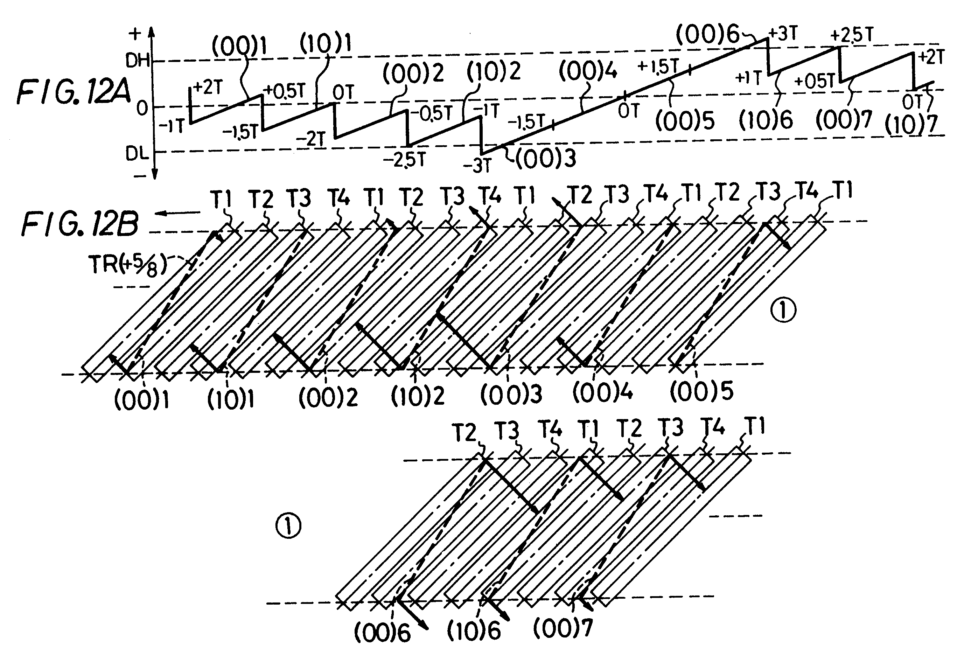

Consider, for example, the playback mode with a tape speed equal to 5/8 times the normal tape speed. Every time that the DT head performs one scan or tracing, the tape is transported in the positive direction by 2.5 tracks so as sequentially to form zero displacement scanning loci TR(+5/8) of the DT head which have an interval or spacing of 2.5 tracks and which cross the recording tracks by 1.5 track amounts, as shown in Figure 12B.

In this case, the tracking track information TTI specifies the corresponding track T1 and the adjacent track T2 with one track therebetween, as shown in Figure 12A. In other words, the tracking track information TTI specifies the recording tracks in the sequential order (00)1, (10)1, (00)2, (10)2, (00)3, (00)4, (00)5, (00)6, (01)6, ....

In accordance therewith, the jump control circuit 11 specifies a 2-track jump when the displacement amount of the DT head approaches the lower displacement limit DL and then specifies a track jump amount of zero when it detects that the displacement amount of the DT head exceeds the lower displacement limit DL.

Accordingly, the displacement amount of the DT head changes from the lower displacement limit DL to the upper displacement limit DH and then exceeds the upper displacement limit DH. At that time, the jump control circuit 11 detects that the DT head has exceeded the upper displacement limit DH and changes the track jump amount to the 2-track jump (that is, -2T). Then, the displacement amount of the DT head changes from the upper displacement limit DH to the lower limit displacement DL.

Hereinbelow similarly, the displacement amount of the DT head can be changed within the tolerance range since the jump control circuit 11 changes the jump amount to a 2-track jump or a zero-track jump.

In consequence, while the DT head carries out the 2-track jump the DT head can reproduce the video signal from the corresponding track T1 at every other scan or tracing, whereas when the DT head carries out the zero-track jump it can reproduce the video signal from the corresponding track T1 at every scan or tracing. Accordingly, in this case also, since the displacement amount of the DT head is relatively small the video signal data reproduced from the corresponding track T1 can be stored in the field memory 8 positively.

### (7) Playback mode with tape speed +3/4 times the normal tape speed

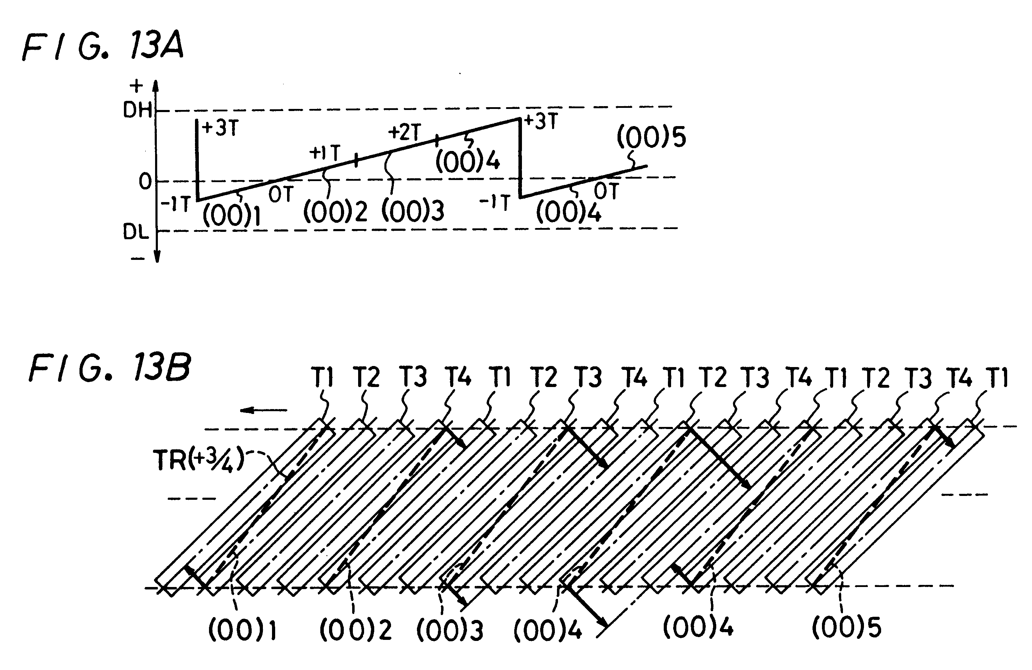

In this playback mode, during every one scan or tracing of the DT head, the tape is transported in the positive direction by 3 track amounts so as sequentially to form zero displacement scanning loci TR(+3/4) of the DT head which have an interval or specing of 3 tracks and cross the recording tracks by one track amount, as shown in Figure 13B. In this case, the tracking track information TTI specifies only the corresponding tracks as shown in Figure 13A. In other words, the tracking track information TTI sequentially specifies (00)1, (00)2, (00)3, (00)4, (00)4, (00)5, .... .

In accordance therewith, the jump control circuit 11 carries out a zero-track jump (that is, OT) during a period in which the DT head performs four scans or tracings continuously and controls the DT head so as to carry out a 4-track jump (that is, -4T) each time that the four scans or tracings are finished.

Consequently, since the DT head scans the same track in the next scan or tracing after the DT head has carried out the 4-track jump, it is possible to prevent the displacement amount of the DT head from exceeding the upper displacement limit DH. As a result, the video signal data reproduced from all of the corresponding tracks T1 can be stored positively in the field memory 8 by virtue of the fact that the displacement amount of the DT head is small as compared with the tolerance range.

### (8) Playback mode with tape speed +3/4 to +1 times the normal tape speed

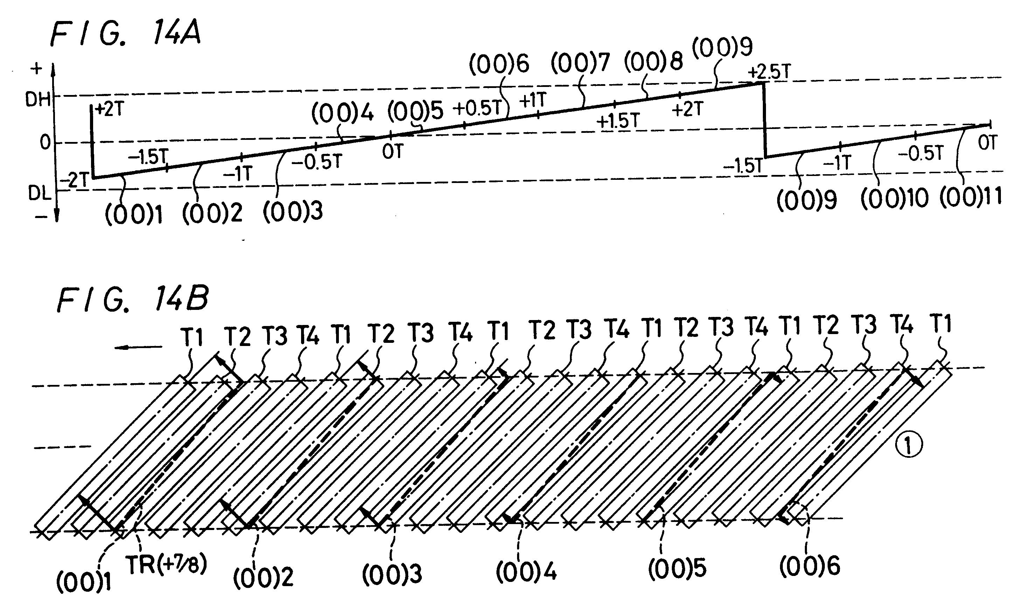

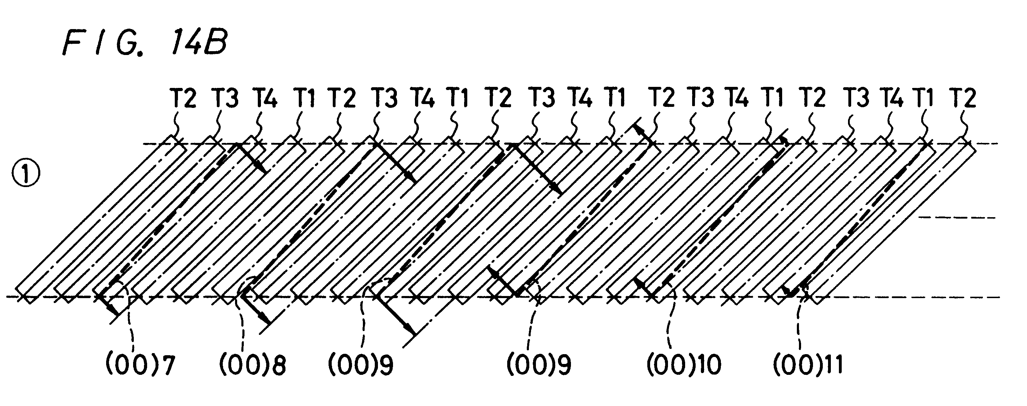

Consider, for example, the playback mode with a tape speed equal to +7/8 times the normal tape speed. Every time that the DT head carries out one scan or tracing, the tape is transported in the positive direction by 3.5 tracks. Accordingly, the zero displacement scanning locus TR(+7/8) of the DT head sequentially forms scanning loci which have an interval or spacing of 3.5 tracks and which cross the recording tracks by 0.5 tracks, as shown in Figure 14B. In this case, the tracing track information TTI specifies the corresponding track "00" at every scan or tracing, as shown in Figure 14A. During a scan or tracing of the DT head in which the displacement amount of the DT head does not exceed the upper displacement limit DH, the jump control circuit 11 specifies a zero-track jump and then specifies a 4-track jump (-4T) when the displacement amount of the DT head reaches the upper displacement limit DH.

Consequently, the displacement of the DT head when the DT head carries out the 4-track jump is returned from +3.5T to -1.5T, and this operation is repeated.

Accordingly, in this case also, it is possible to store in the field memory 8 the video signal data reproduced from all of the corresponding tracks T1 by displacing the DT head by a small value within the tolerance range.

### (9) Playback mode with tape speed +1 to +1.5 times the normal tape speed

Consider, for example, the playback mode with a tape speed equal to +1.25 times the normal tape speed. In this case, every time the DT head carries out one scan or tracing the tape is transported by 5 track amounts. Accordingly, the zero displacement scanning locus TR(+1.25) of the DT head sequentially forms scanning loci which have an interval or spacing of 5 tracks and which cross the recording tracks by one track amount, as shown in Figure 15B.

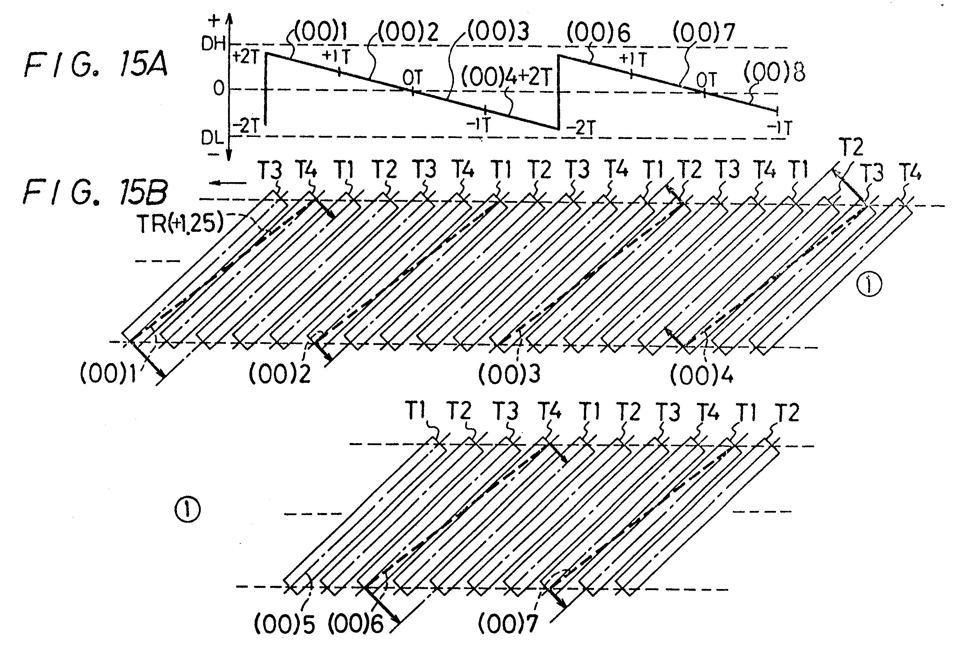

In this case, the tracking track information TTI specifies the corresponding track "00" at every scan or tracing, as shown in Figure 15A. The jump control circuit 11 commands a zero-track jump (OT) during a time when four scans or tracings are carried out continuously and then commands a 4-track jump in the reverse direction (that is, +4T) each time the four scanning or tracing operations with the zero-track jump are ended. As a result, since at every scan or tracing the DT head is displaced four times from the upper displacement limit DH to the lower displacement limit DL by one track each and then is returned to the original displacement, the DT head can store the necessary video signal data reproduced from the corresponding track T1 in the field memory 8 while maintaining the displacement within the tolerance range.

In this case, since the tape speed exceeds the normal playback tape speed, it is not necessary to reproduce the video signals of all of the corresponding tracks T1. The video signal is reproduced as shown in Figure 15B, one corresponding track (00)5 being skipped upon the 4-track jump operation.

### (10) Still mode to playback mode with tape speed -1/4 times the normal tape speed

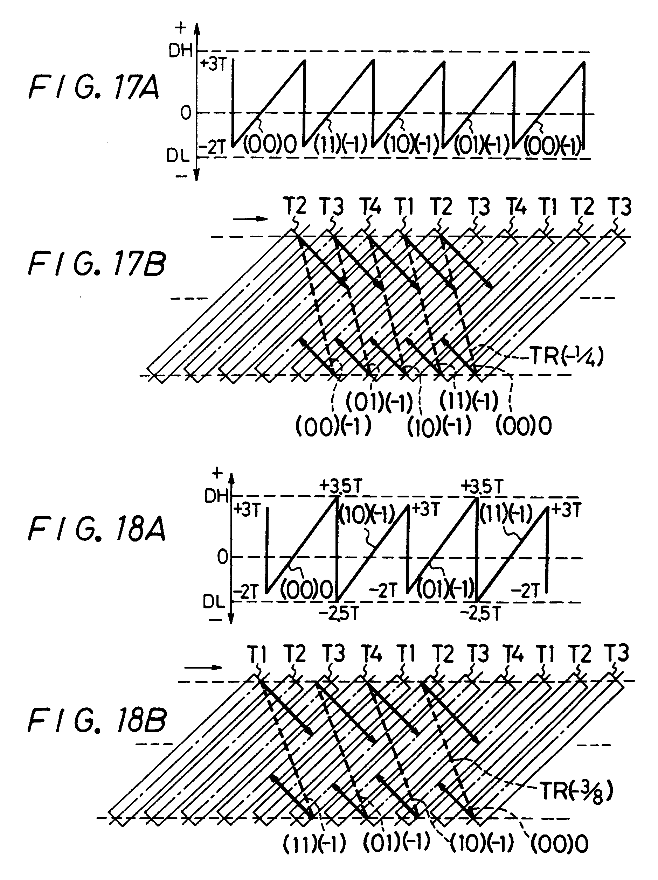

Consider, for example, the playback mode with a tape speed equal to -1/8 times the normal tape speed. In this case, during the time in which the DT head achieves one scan or tracing, the tape is transported in the reverse direction by 1/8 of a track amount, as shown in Figure 16B. Accordingly, contrary to the case in which the tape is transported in the forward direction, zero displacement scanning loci TR(-1/8) of the DT head are formed sequentially at a spacing or interval of 1/2 of a track so as to cross the recording tracks by 4.5 track amounts in the direction from right to left.

The tracking track information TTI specifies sequentially the right-hand side tracks in the order (00)0, (00)0, (00)0, (11)(-1), .... as shown in Figure 16A.

Accordingly, the DT head carries out a dynamic tracking operation such that, after it scans or traces the track T1 three times, it scans sequentially the adjacent tracks T4, T3, T2, T1, .... twice each. As a result, the video signal obtained when the DT head scans the corresponding track T1 is stored in the field memory 8.

### (11) Playback mode with tape speed -1/4 times the normal tape speed

In this case, during the time in which the DT head performs one scan or tracing, the tape is transported in the reverse direction by one track amount. Accordingly, the zero displacement scanning locus TR(-1/4) of the DT head is formed sequentially as scanning loci which have an interval or spacing of one track and which cross the recording tracks by 5 track amounts in the right to left direction, as shown in Figure 17B. The tracking track information TTI sequentially specifies the tracks in the order of the adjacent tracks T1, T4, T3, T2, T1, namely as (00)0, (11)(-1), (10)(-1), (01)(-1), (00)(-1), as shown in Figure 17A.

Consequently, as shown in Figure 17B, it is possible to store in the field memory 8 the video signal data which is reproduced when the DT head scans the corresponding track T1 in the dynamic tracking mode.

### (12) Playback mode with tape speed -1/4 to -1/2 times the normal tape speed

Consider, for example, the playback mode with a tape speed equal to -3/8 times the normal tape speed. In this case, every time that the DT head carries out one scan or tracing the tape is transported in the reverse direction by 1.5 tracks, as shown in Figure 18B.

Accordingly, the zero displacement scanning locus TR(-3/8) of the DT head is formed sequentially in the right to left direction as scanning loci having an interval or spacing of 1.5 tracks in the right to left direction and which cross the recording tracks by 5.5 track amounts.

The tracking track information TTI specifies that the tracks are sequentially to be tracked dynamically in the order (00)0, (10)(-1), (01)(-1), (11)(-1), ...., as shown in Figure 18A.

According to the embodiment of the present invention set forth above, since each time the DT head scans or traces a recording track the track to be scanned or traced is specified and the displacement amount of the DT head relative to the specified track is determined, the DT head can scan or trace the corresponding track positively in the dynamic tracking mode while being displaced by a displacement amount which at all times is within the tolerance displacement amount. Consequently, even when the tape speed is varied over a wide range such as in the shuttle mode, it is possible in practice to obtain a reproduced video signal which is satisfactory.

## Claims

1. A video signal reproducing apparatus for reproducing a video signal from a plurality of tracks (T1 to T4) of a record medium, the apparatus comprising:
a plurality of dynamic tracking heads, each arranged for scanning a corresponding track of the plurality of tracks (T1 to T4) simultaneously with the other heads;
head deflecting means for deflecting the dynamic tracking heads simultaneously in a direction transverse to the direction of the tracks (T1 to T4); and
a video signal memory (8); characterised by
address generating means (WT) for generating a write address signal (WAD) indicative of the start address of each horizontal scanning line, the video signal memory (8) storing a field of the video signal reproduced by the plurality of heads at an address designated by the address generating means (WT);
means for providing a head position information signal (PSI) representing a mechanical position of a head and tracking track information (TTI) representing a difference between a track currently being scanned and the corresponding track which the head should follow;
and
a control circuit (11) connected to receive the head position information signal (PSI) and the tracking track information (TTI) and operative to generate a drive signal (JUA) for the head deflecting means and a control signal (JUM), indicative of head deflection direction and head deflection amount, for the address generating means (WT), the address generating means being arranged to be controlled by the tracking track information (TTI) to inhibit storage in the video signal memory (8) of any video signal reproduced by a head from a track not being the corresponding track which that head should follow.

2. Apparatus according to claim 1, which is operative to reproduce a video signal in the form of component video signals which are recorded on individual ones of the tracks (T1 to T4).

3. Apparatus according to claim 1, which is operative to reproduce a video signal in the form of a red signal, a blue signal, a first green signal and a second green signal which are recorded on four respective tracks (T1 to T4) of the record medium.

4. Apparatus as claimed in claim 1, claim 2 or claim 3, including means (3, 4) for deriving a vertical synchronising signal (V1, V2) from vertical synchronising signal recording areas located at end portions of the tracks (T1 to T4).

5. Apparatus according to claim 1, claim 2 or claim 3, including means (3, 4) for deriving first and second vertical synchronising signals (V1, V2) from respective vertical synchronising signal recording areas located at opposite end portions of the tracks (T1 to T4).

6. Apparatus according to any one of the preceding claims, wherein the video signal memory (8) comprises a one field video memory which is arranged sequentially to write therein horizontal scanning lines of the video signal.

7. Apparatus according to any one of the preceding claims, wherein the head deflecting means comprises a bimorph leaf.

8. Apparatus according to any one of the preceding claims, which is operative to reproduce a video signal from a record medium in the form of a magnetic tape.

9. Apparatus according to any one of the preceding claims, comprising a read address signal means (RD) for reading out the video signal from the video signal memory (8) cyclically for reproducing the video signal.

## Patentansprüche

1. Videosignal-Wiedergabegerät zur Wiedergabe eines Videosignals von einer Mehrzahl von Spuren (T1 bis T4) eines Aufzeichnungsmediums
mit einer Mehrzahl von Köpfen mit dynamischer Spurführung, von denen jeder so angeordnet sind, daß er gleichzeitig mit den anderen Köpfen eine korrespondierende Spur aus der Mehrzahl von Spuren (T1 bis T4) abtastet,
mit Kopfablenkmitteln zum gleichzeitigen Ablenken der mit dynamischer Spurführung arbeitenden Köpfe in einer Richtung quer zur Richtung der Spuren (T1 bis T4),
sowie mit einem Videosignalspeicher (8),
**gekennzeichnet durch**
einen Adressengenerator (WT) zur Generierung eines Schreibadressensignals (WAD), das für die Startadresse der jeweiligen horizontalen Abstastzeile kennzeichnend ist, wobei der Videosignalspeicher (8) an einer von dem Adressengenerator (WT) festgelegten Adresse ein Halbbild des von der Mehrzahl von Köpfen reproduzierten Videosignals speichert,
Mittel zur Erzeugung eines Kopfpositions-Informationssignals (PSI), das die mechanische Position eines Kopfes repräsentiert, und einer Spurführungsinformation (TTI), die die Differenz zwischen einer gerade abgestasteten Spur und der korrespondierenden Spur repräsentiert, der der Kopf folgen sollte,
und eine Steuerschaltung (11), die so angeordnet ist, daß sie das Kopfpositions-Informationssignal (PSI) und die Spurführungsinformation (TTI) aufnimmt und ein Treibersignal (JUA) für die Kopfablenkmittel sowie ein die Richtung und den Betrag der Kopfablenkung kennzeichnendes Steuersignal (JUM) für den Adressengenerator (WT) erzeugt, wobei der Adressengenerator so angeordnet ist, daß er durch die Spurführungsinformation (TTI) in einer Weise gesteuert wird, daß die Speicherung eines Videosignals in den Videosignalspeicher (8) verhindert wird, das ein Kopf von einer Spur reproduziert, die nicht die korrespondierende Spur ist, der dieser Kopf folgen sollte.

2. Gerät nach Anspruch 1, welches das Videosignal in Form von Komponenten-Videosignalen reproduziert, die in individuellen Exemplaren der Spuren (T1 bis T4) aufgezeichnet sind,

3. Gerät nach Anspruch 1, welches das Videosignal in Form eines Rotsignals, eines Blausignals, eines ersten Grünsignals und eines zweiten Grünsignals reproduziert, die in vier entsprechenden Spuren (T1 bis T4) des Aufzeichnungsmediums aufgezeichnet sind.

4. Gerät nach Anspruch 1, 2 oder 3 mit Mitteln (3, 4) zur Gewinnung eines vertikalen Synchronisiersignals (V1, V2) aus Vertikalsynchronisiersignalfeldem, die sich in Endbereichen der Spuren (T1 bis T4) befinden.

5. Gerät nach Anspruch 1, 2 oder 3 mit Mitteln (3, 4) zur Gewinnung eines ersten und eines zweiten vertikalen Synchronisiersignals (V1, V2) aus Vertikalsynchronisiersignalfeldem, die sich in entgegengesetzten Endbereichen der Spuren (T1 bis T4) befinden.

6. Gerät nach einem der vorhergehenden Ansprüche, bei dem der Videosignalspeicher (8) einen sequentiell angeordneten Halbbild-Videospeicher aufweist, derart daß in ihm horizontale Abtastzeilen des Videosignals eingeschrieben werden.

7. Gerät nach einem der vorhergehenden Ansprüche, bei dem die Kopfablenkmittel ein bimorphes Blatt umfassen.

8. Gerät nach einem der vorhergehenden Ansprüche, bei dem das Videosignal von einem Aufzeichnungsmedium in Form eines Magnetbandes reproduziert wird.

9. Gerät nach einem der vorhergehenden Ansprüche mit einer Leseadressensignaleinrichtung (RD) zum zyklischen Auslesen des Videosignals aus dem Videosignalspeicher (8) für Wiedergabe des Videosignals.

## Revendications

1. Appareil de reproduction de signal vidéo pour reproduire un signal vidéo à partir d'une pluralité de pistes (T1 à T4) d'un support d'enregistrement, l'appareil comprenant :
une pluralité de têtes de suivi de piste dynamique, chacune étant agencée pour balayer une piste correspondante de la pluralité de pistes (T1 à T4) simultanément avec les autres têtes ;
un moyen de déviation de tête pour dévier les têtes de suivi de piste dynamique simultanément suivant une direction transversale à la direction des pistes (T1 à T4) ; et
une mémoire de signal vidéo (8),
caractérisé par :
un moyen de génération d'adresse (WT) pour générer un signal d'adresse d'écriture (WAD) indicatif de l'adresse de début de chaque ligne de balayage horizontal, la mémoire de signal vidéo (8) stockant une trame du signal vidéo reproduit par la pluralité de têtes en une adresse indiquée par le moyen de génération d'adresse (WT) ;
un moyen pour produire un signal d'information de position de tête (PSI) qui représente une position mécanique d'une tête et une information de piste à suivre (TTI) qui représente une différence entre une piste présentement balayée et la piste correspondante que la tête doit suivre ; et
un circuit de commande (11) connecté pour recevoir le signal d'information de position de tête (PSI) et l'information de piste à suivre (TTI) et servant à générer un signal de pilotage (JUA) pour le moyen de déviation de tête et un signal de commande (JUM) indicatifs d'un sens de déviation de tête et d'une valeur de déviation de tête, pour le moyen de génération d'adresse (WT), le moyen de génération d'adresse étant agencé de manière à être commandé par l'information de pistes à suivre (TTI) afin d'empêcher un stockage dans la mémoire de signal vidéo (8) d'un quelconque signal vidéo reproduit par une tête depuis une piste qui n'est pas la piste correspondante que cette tête doit suivre.

2. Appareil selon la revendication 1, lequel sert à reproduire un signal vidéo sous la forme de signaux vidéo de composante qui sont enregistrés sur certaines individuelles des pistes (T1 à T4).

3. Appareil selon la revendication 1, lequel sert à reproduire un signal vidéo sous la forme d'un signal rouge, d'un signal bleu, d'un premier signal vert et d'un second signal vert qui sont enregistrés sur quatre pistes respectives (T1 à T4) du support d'enregistrement.

4. Appareil selon la revendication 1, 2 ou 3, incluant un moyen (3, 4) pour dériver un signal de synchronisation verticale (V1, V2) à partir de zones d'enregistrement de signal de synchronisation verticale placées au niveau de parties d'extrémité des pistes (T1 à T4).

5. Appareil selon la revendication 1, 2 ou 3, incluant un moyen (3, 4) pour dériver des premier et second signaux de synchronisation verticale (V1, V2) à partir de zones d'enregistrement de signal de synchronisation verticale respectives placées au niveau de parties d'extrémité opposées des pistes (T1 à T4).

6. Appareil selon l'une quelconque des revendications précédentes, dans lequel la mémoire de signal vidéo (8) comprend une mémoire vidéo de trame qui est agencée séquentiellement pour écrire en son sein des lignes de balayage horizontal du signal vidéo.

7. Appareil selon l'une quelconque des revendications précédentes, dans lequel le moyen de déviation de tête comprend une feuille métallique bimorphe.

8. Appareil selon l'une quelconque des revendications précédentes, lequel sert à reproduire un signal vidéo à partir d'un support d'enregistrement se présentant sous la forme d'une bande magnétique.

9. Appareil selon l'une quelconque des revendications précédentes, comprenant un moyen de signal d'adresse de lecture (RD) pour lire le signal vidéo dans la mémoire de signal vidéo (8) de façon cyclique pour reproduire le signal vidéo.
